# EUROPÄISCHE PATENTANMELDUNG

(11) **EP 4 446 860 A1**
(43) Veröffentlichungstag der Anmeldung: **16.10.2024**
(21) Anmeldenummer: 24168352.3
(22) Anmeldetag: 04.04.2024
(51) Int. Cl.: G06F 3/0482, G06F 3/0481

(54) **VERFAHREN ZUR BEDIENUNG EINER TEXTILMASCHINE**

(30) Priorität: 11.04.2023 LU 503899
(71) Anmelder: Saurer Spinning Solutions GmbH & Co. KG, 52531 Übach-Palenberg (DE)
(72) Erfinder: Gais, Ulrich, 58313 Herdecke (DE)
(74) Vertreter: Morgenthum-Neurode, Mirko

(57) **Zusammenfassung**

Die Erfindung betrifft ein Verfahren (100) zur Bedienung einer Textilmaschine (1), umfassend die nachfolgenden Schritte:
- Bereitstellen (101) einer Abruffunktion (110) für wenigstens eine Benutzeroberfläche (200), wobei die wenigstens eine Benutzeroberfläche (200) mehrere Schnittstellenelemente (210) umfasst, welche zur Ausgabe von Maschinenparametern und/oder Einstellungen der Textilmaschine (1) und/oder zur Eingabe durch einen Benutzer aufgerufen werden, um dadurch die Textilmaschine (1) zu bedienen, wobei jedem der Schnittstellenelemente (210) eine Bezeichnung (220) zugeordnet ist, wobei durch die Abruffunktion (110) ein Abrufen der Bezeichnungen (220) auf Basis einer Abrufvorgabe (111) vorgesehen ist, um diejenigen der Bezeichnungen (220) zu ermitteln, welche der Abrufvorgabe (111) entsprechen, wobei die Abrufvorgabe (111) durch den Benutzer definiert ist,
- Initiieren (102) einer Ausgabe (130) der ermittelten Bezeichnungen (220) über die wenigstens eine Benutzeroberfläche (200) zur Auswahl durch den Benutzer,
- Bereitstellen (103) einer Navigationsfunktion (120) für die wenigstens eine Benutzeroberfläche (200), wobei durch die Navigationsfunktion (120) das Schnittstellenelement (210) aufgerufen wird, dem die durch den Benutzer ausgewählte ermittelte Bezeichnung (220) zugeordnet ist.

## Beschreibung

Die vorliegende Erfindung betrifft ein Verfahren zur Bedienung einer Textilmaschine. Ferner bezieht sich die Erfindung auf ein System, ein Computerprogramm sowie eine Vorrichtung zu diesem Zweck.

### Stand der Technik

Im Stand der Technik werden grafische Benutzeroberflächen zunehmend verwendet, um eine Bedienung von Textilmaschinen vorzunehmen, d. h. Textilmaschinen zu steuern und zu überwachen. Diese Benutzeroberflächen bieten dem Benutzer eine visuelle Darstellung der Maschinenzustände und der auszuführenden Aufgaben. Die Benutzeroberflächen können verschiedene Funktionen umfassen, wie beispielsweise die Einstellung von Maschinenparametern, die Überwachung von Maschinenzuständen und die Anzeige von Alarmmeldungen. Dabei können Schnittstellenelemente zu den Funktionen vorgesehen sein, welche zur Interaktion mit dem Benutzer grafisch dargestellt werden. Darüber hinaus können die Benutzeroberflächen in der Regel einfach an die Bedürfnisse des Benutzers angepasst werden, um eine erhöhte Benutzerfreundlichkeit zu gewährleisten.

Die Einstellung von Maschinenparametern kann die Eingabe einer großen Anzahl von Einstell- und Datenwerten erforderlich machen. Aufgrund der großen Anzahl der für diese Ein- und Ausgaben vorgesehenen Schnittstellenelemente der Benutzeroberfläche kann die Navigation bei geringer Erfahrung und Vorkenntnissen schwierig und zeitaufwendig sein. So muss das Wissen des Benutzers vorhanden sein, an welcher Stelle sich die entsprechenden Schnittstellenelemente befinden.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine verbesserte Lösung zur Bedienung einer Textilmaschine vorzuschlagen.

### Offenbarung der Erfindung

Gegenstand der Erfindung ist ein Verfahren mit den Merkmalen des Anspruchs 1, ein System mit den Merkmalen des Anspruchs 13, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, dem erfindungsgemäßen Computerprogramm sowie der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zur Überwachung und/oder Bedienung einer Textilmaschine. Das Verfahren kann hierzu die nachfolgenden Schritte umfassen, welche nacheinander in der angegebenen Reihenfolge und/oder wiederholt und/oder automatisiert ausgeführt werden können:
- Bereitstellen einer Abruffunktion für wenigstens eine, vorzugsweise grafische, Benutzeroberfläche, kurz GUI (engl. graphical user interface), wobei die wenigstens eine Benutzeroberfläche mehrere Schnittstellenelemente umfassen kann, welche zur Ausgabe von Maschinenparametern und/oder Einstellungen der Textilmaschine und/oder zur Eingabe durch einen Benutzer aufgerufen werden, um dadurch die Textilmaschine zu überwachen und/oder zu bedienen, wobei jedem der Schnittstellenelemente eine Bezeichnung zugeordnet ist, wobei durch die Abruffunktion ein Abrufen, insbesondere Suchen, der Bezeichnungen auf Basis einer Abrufvorgabe vorgesehen sein kann, um diejenigen der Bezeichnungen zu ermitteln, welche der Abrufvorgabe entsprechen, vorzugsweise durch eine Überprüfung der Bezeichnungen hinsichtlich einer Entsprechung der Abrufvorgabe, wobei bevorzugt die Abrufvorgabe durch den Benutzer definiert ist,
- Initiieren einer Ausgabe der ermittelten Bezeichnungen über die wenigstens eine Benutzeroberfläche zur Auswahl durch den Benutzer, vorzugsweise, um den Benutzer diejenige Bezeichnung auswählen zu lassen, deren Schnittstellenelement der Benutzer aufrufen möchte,
- Bereitstellen einer Navigationsfunktion für die wenigstens eine Benutzeroberfläche, wobei durch die Navigationsfunktion dasjenige Schnittstellenelement aufgerufen wird, dem die durch den Benutzer ausgewählte ermittelte Bezeichnung zugeordnet ist.

Die Erfindung ermöglicht damit ein gezieltes Auffinden und eine direkte Auswahl einer Eingabe oder Anzeige in der Benutzeroberfläche. Die Textilmaschine kann z. B. als eine Rotorspinnmaschine ausgeführt sein. Diese Maschine zeichnet sich bspw. dadurch aus, dass die Fasern zu einem Faden durch das Drehen eines Rotors zusammengeführt werden. Eine weitere Möglichkeit ist die Ausbildung der Textilmaschine als Ringspinnmaschine. Diese verwendet bspw. ein ringförmiges Element, um die Fasern zu einem Faden zu verbinden. Ferner kann die Textilmaschine als eine Luftspinnmaschine ausgebildet sein. Hierbei kann es vorgesehen sein, dass ein Luftstrom verwendet wird, um die Fasern zu verbinden und zu einem Faden zu formen. Die Maschinenparameter der Textilmaschine können zumindest einen der folgenden Parameter umfassen: die Spindelgeschwindigkeit, die Garnfeinheit, die Anzahl der Spindeln pro Maschine, die Drehzahl der Spindel, die Vorspannung des Fadens, die Einstellung der Walzen oder Walzengruppen, die den Faden führen und spannen, die Einstellung der Fadenspannung und - führung. Diese Parameter können je nach Maschinentyp und Anwendungsgebiet variieren und einen Einfluss auf die Produktionskapazität und -qualität haben. Es kann vorgesehen sein, dass die Bedienung der Textilmaschine dadurch ermöglicht wird, dass die Schnittstellenelemente zur Ausgabe der Maschinenparameter und/oder weiterer Einstellungen der Textilmaschine und/oder zur Eingabe, insbesondere der Einstellungen für die Maschinenparameter und/oder weiterer Einstellungen, durch einen Benutzer aufgerufen werden.

Gemäß einem weiteren Vorteil kann vorgesehen sein, dass die Abruffunktion eine Suchfunktion umfasst. Damit können in den Bezeichnungen diejenigen der Bezeichnungen ermittelt werden, welche der Abrufvorgabe in der Form einer Suchvorgabe entsprechen. In anderen Worten kann die Suchfunktion dazu ausgeführt sein, die Bezeichnungen darauf zu überprüfen, ob diese der Abrufvorgabe bzw. Suchvorgabe entsprechen. Dabei kann die Suchvorgabe vorzugsweise ein Suchmuster und/oder einen Suchbegriff und/oder eine Ähnlichkeitsvorgabe zur unscharfen Suche nach einem Suchbegriff (d. h. einer Zeichenfolge) und/oder einen oder mehrere Anfangsbuchstaben einer zu suchenden Bezeichnung umfassen. Für die Erfüllung der Suchvorgabe können weitere Kriterien vorgegebenen sein, z. B., dass der Suchbegriff zumindest teilweise in der Bezeichnung vorkommt. Bspw. kann die Suchvorgabe definieren, dass und/oder in welchem Umfang das Suchmuster und/oder der Suchbegriff und/oder die Ähnlichkeitsvorgabe und/oder die Anfangsbuchstaben in einer Bezeichnung vorkommen, damit die Suchvorgabe dieser Bezeichnung entspricht. Die Suchfunktion kann auch als eine Freitextsuche ausgeführt sein und somit die Suche nach einem beliebigen Text in den Bezeichnungen für den Benutzer ermöglichen.

Eine weitere Möglichkeit der Ausbildung der Abruf- und/oder Suchfunktion ist ein Register. Das Register kann durch ein anwählbares Auswahl-Menü dargestellt werden und ermöglicht es dem Benutzer, durch eine direkte Auswahl aus einer Liste der Bezeichnungen unmittelbar zu einer Seite der Benutzeroberfläche zu wechseln, in der das Schnittstellenelement der ausgewählten Bezeichnung vorkommt.

Ein weiterer Vorteil kann im Rahmen der Erfindung erzielt werden, wenn durch die Abruffunktion eine Mehrzahl derjenigen der Bezeichnungen ermittelt wird, welche der Abrufvorgabe entsprechen. Somit können mehrere Bezeichnungen zur Auswahl für den Benutzer stehen, welche der Abrufvorgabe entsprechen (z. B. mit einem bestimmten Anfangsbuchstaben anfangen oder eine bestimmte Zeichenfolge aufweisen). Vorteilhafterweise werden die ermittelten Bezeichnungen als Liste, vorzugsweise Auswahlliste, auf einer gemeinsamen Seite der Benutzeroberfläche ausgegeben.

Ferner kann das Initiieren der Ausgabe die nachfolgenden Schritte umfassen, welche vorzugsweise nacheinander ausgeführt werden:
- Ermitteln einer Häufigkeit, mit welcher die Schnittstellenelemente, denen die ermittelten Bezeichnungen zugeordnet sind, aufgerufen wurden,
- Ermitteln einer Reihenfolge für die Ausgabe der ermittelten Bezeichnungen, um die Ausgabe der ermittelten Bezeichnungen abhängig von der ermittelten Häufigkeit sortiert zu initiieren, vorzugsweise derart, dass diejenige der ermittelten Bezeichnungen an erster Stelle ausgegeben wird, deren Schnittstellenelement bei einer vorangegangenen Bedienung der Textilmaschine am häufigsten aufgerufen wurde.

Dies ermöglicht einen schnellen Zugriff auf die relevantesten Schnittstellenelemente. Dabei kann ein Protokollieren der Anzahl der Aufrufe der Schnittstellenelemente während der Bedienung der Textilmaschine vorgesehen sein, um die Häufigkeit auf Basis der protokollierten Anzahl zu ermitteln. Das Protokoll kann z. B. in einem nicht-flüchtigen Speicher der erfindungsgemäßen Vorrichtung hinterlegt werden. Die Ausgabe kann z. B. derart initiiert werden, dass die Bezeichnungen in absteigender Reihenfolge derer Häufigkeit sortiert bzw. aufgelistet werden.

Auch ist es optional denkbar, dass das Verfahren ferner umfasst: Bereitstellen einer Auswahlfunktion für die Auswahl durch den Benutzer, um wenigstens oder genau eine der ermittelten Bezeichnungen auszuwählen, vorzugsweise durch eine Initiierung einer Ausgabe einer Auswahl- und/oder Navigationsschaltfläche für die jeweilige ermittelte Bezeichnung, wobei bevorzugt eine Auswahlaktion durch den Benutzer vorgesehen ist, bei welcher die Auswahl- und/oder Navigationsschaltfläche durch den Benutzer aktiviert wird, wobei besonders bevorzugt der Auswahl- und/oder Navigationsschaltfläche ein Verweis zu einem der Schnittstellenelemente zugewiesen wird. Der Verweis kann dabei ein Kennzeichen des Schnittstellenelements oder einer Seite der Benutzeroberfläche mit dem Schnittstellenelement sein, welcher der Auswahl- und/oder Navigationsschaltfläche zugewiesen wird, um bei einem Betätigen der Auswahl- und/oder Navigationsschaltfläche zum Schnittstellenelement bzw. zu der Seite zu gelangen.

Darüber hinaus kann das Verfahren umfassen: Bereitstellen der Auswahlfunktion, wobei für die ermittelten Bezeichnungen bei mehrfachem Vorkommen einer gleichlautenden Bezeichnung eine Ausgabe einer Angabe über eine Verortung derer Schnittstellenelemente in der Benutzeroberfläche, vorzugsweise in einem Menübaum und/oder der Seite der Benutzeroberfläche, initiiert wird, um die Schnittstellenelemente auf Basis der Verortung auszuwählen. Insbesondere bei gleichlautenden Bezeichnungen, welche allerdings unterschiedlichen Schnittstellenelementen ggf. auf unterschiedlichen Seiten zugeordnet sind, kann dies zur eindeutigen Identifizierung des gewünschten Schnittstellenelements durch den Benutzer dienen. Hierzu kann bspw. jede Seite und/oder jeder Eintrag im Menübaum eine eigene Verortungsbezeichnung aufweisen, welche zusätzlich zu den ermittelten Bezeichnungen angezeigt wird und diesen ggf. grafisch zugeordnet werden (z. B. durch eine benachbarte Darstellung und/oder durch das Einblenden eines Hinweises mit der Verortungsbezeichnung, wenn eine der Bezeichnungen angewählt wird).

Ferner kann im Rahmen der Erfindung vorgesehen sein, dass das Bereitstellen der Navigationsfunktion umfasst: Initiieren einer Ausgabe einer Auswahl- und/oder Navigationsschaltfläche für die jeweilige ermittelte Bezeichnung, um bei einer Aktivierung der Auswahl- und/oder Navigationsschaltfläche durch den Benutzer die Bezeichnung auszuwählen und/oder das Schnittstellenelement, dem die durch den Benutzer ausgewählte ermittelte Bezeichnung zugeordnet ist, dadurch aufzurufen, dass eine Darstellung des Schnittstellenelements auf der Benutzeroberfläche initiiert wird und die entsprechende Ausgabe wenigstens eines Maschinenparameters und/oder wenigstens einer Einstellung initiiert und/oder Eingabe durch den Benutzer ausgewertet wird, um vorzugsweise auf Basis der Eingabe die Textilmaschine anzusteuern, bevorzugt einen eingegebenen Einstell- und/oder Datenwert an die Textilmaschine zu übertragen. Ferner können initiiert durch die Aktivierung aktuelle Einstell- und/oder Messwerte der Textilmaschine ermittelt und ausgegeben werden. Auch ist es möglich, dass zur Darstellung des Schnittstellenelements ein Wechsel einer Seite der Benutzeroberfläche initiiert wird.

In einer weiteren Möglichkeit kann vorgesehen sein, dass die Schnittstellenelemente wenigstens eines der folgenden Elemente umfassen: ein Eingabeelement zur Eingabe von Einstell- und/oder Datenwerten für die Textilmaschine, ein Ausgabeelement zur Ausgabe von Einstell- und/oder Messwerten der Textilmaschine, ein Aktionselement zur Steuerung der Textilmaschine, eine Menübezeichnung für Menüs der wenigstens einen Benutzeroberfläche, ein Alarmelement zur Ausgabe eines Alarms der Textilmaschine. Damit kann eine umfassende Bedienung der Textilmaschine über die Benutzeroberfläche möglich sein.

Es ist möglich, dass die Ausgabe der ermittelten Bezeichnungen, insbesondere in der Form einer Auflistung, auf einer anderen Seite der Benutzeroberfläche initiiert wird als den Seiten der Benutzeroberfläche, auf denen deren Schnittstellenelemente bei dem Aufruf dargestellt werden. In anderen Worten kann die Ausgabe und vorzugsweise Auflistung der ermittelten Bezeichnungen - d.h. insbesondere eines Suchergebnisses der Aufruffunktion - auf einer anderen Seite der Benutzeroberfläche erfolgen als die Darstellung der zugehörigen Schnittstellenelemente, wobei letztere ggf. auf unterschiedlichen Seiten ausgegeben werden. Dies hat den Vorteil, dass auch bei einer komplexen Struktur der Benutzeroberfläche mit mehreren Seiten schnell und komfortabel durch die Abruffunktion durch diese navigiert werden kann. Die Seiten sind dabei vorzugsweise unterschiedliche, alternative Ansichten der Benutzeroberfläche, welche insbesondere nicht gleichzeitig angezeigt werden können.

Vorteilhafterweise kann im Rahmen der Erfindung vorgesehen sein, dass die nachfolgenden Schritte vorgesehen sind:
- Empfangen von Daten von der Textilmaschine, wobei die Daten wenigstens einen Einstell- und/oder Messwert der Textilmaschine angeben und vorzugsweise aus einer Messung wenigstens eines Maschinenparameters der Textilmaschine resultieren, bspw. durch wenigstens einen Sensor der Textilmaschine,
- Zuordnen des wenigstens einen Einstell- und/oder Messwertes zu einem der Schnittstellenelemente,
- Initiieren einer Ausgabe des wenigstens einen Einstell- und/oder Messwertes, wenn das zugeordnete Schnittstellenelement aufgerufen wird, wobei bevorzugt das jeweilige Schnittstellenelement den wenigstens einen Einstell- und/oder Messwert in der Form eines Soll- und/oder Ist-Wertes des Maschinenparameters anzeigt,
- Initiieren einer Ausgabe derjenigen der Bezeichnungen, welche dem aufgerufenen Schnittstellenelement zugeordnet sind.

Die Bezeichnungen können somit Bezeichnungen der Schnittstellenelemente sein, welche die Funktion für den Benutzer erklären. Damit ist eine intuitive Bedienung der Textilmaschine möglich.

Weiter ist im Rahmen der Erfindung denkbar, dass die Abruffunktion eine Suchfunktion umfasst, um bei den Maschinenparametern, vorzugsweise in den Einstell- und/oder Messwerten, diejenigen zu ermitteln, welche der Abrufvorgabe in der Form einer Suchvorgabe entsprechen. In anderen Worten kann alternativ oder zusätzlich zur Suche in den Bezeichnungen auch eine Suche in den Einstell- und/oder Messwerten durch die Suchfunktion möglich sein. Dies kann bspw. auch eine Suche nach bestimmten Zuständen, wie kritischen Zuständen der Textilmaschine, umfassen. Auch können bspw. Wertebereiche der Einstell- und/oder Messwerte gesucht werden, z. B. kritische Wertebereiche oder dergleichen.

Auch ist es möglich, dass die Abrufvorgabe eine Bedingung für die Schnittstellenelemente definiert, wobei die Abruffunktion die Bezeichnungen darauf überprüfen kann, dass deren Schnittstellenelemente die Bedingung erfüllen, wobei vorzugsweise die Bedingung eine Verfügbarkeit einer Funktion des Schnittstellenelementes bei der Textilmaschine umfasst. In anderen Worten ist es möglich, dass automatisch geprüft wird, welche Funktionalität der konkreten Textilmaschine vorhanden ist, und nur die zu dieser Funktionalität gehörenden Bezeichnungen ermittelt werden. Dies ermöglicht es, die Abruffunktion für verschiedene Textilmaschinen unterschiedlicher Funktionalität und/oder für die Textilmaschine in unterschiedlichen Zuständen einzusetzen. Die Funktionalität und/oder Verfügbarkeit kann z. B. dadurch geprüft werden, dass eine Datenbank abgefragt wird, in welcher die entsprechenden Informationen hinterlegt sind. Bei der Überprüfung der Bedingung kann ggf. auch überprüft werden, ob eine bestimmte Komponente bei der Textilmaschine, wie ein Wechsler, vorhanden ist, um die zugehörigen Schnittstellenelemente zur Einstellung dieser Komponente nur dann zu berücksichtigen und die zugehörigen Bezeichnungen zu ermitteln.

Ferner ist es optional vorgesehen, dass wenigstens einer der nachfolgenden Schritte vorgesehen ist:
- Auswerten einer Benutzersucheingabe, um die Abrufvorgabe zu definieren,
- Auffordern des Benutzers zur Eingabe der Benutzersucheingabe.

Dabei kann die Benutzersucheingabe aus einer Tastatureingabe und/oder Eingabe über einen Touchscreen und/oder einer Spracheingabe und/oder einer Gestenerkennung und/oder einer Chatbot-Interaktion resultieren. Dies ermöglicht eine vielseitige und komfortable Eingabe benutzerdefinierter Abrufvorgaben.

Nach einer weiteren Möglichkeit kann vorgesehen sein, dass die Abrufvorgabe ein Suchmuster und/oder einen Suchbegriff umfasst, wobei der nachfolgende Schritt durchgeführt werden kann: Automatisches Ergänzen der Abrufvorgabe, vorzugsweise der Benutzersucheingabe, um Synonyme und/oder ähnliche Suchmuster und/oder ähnliche Suchbegriffe, um in den Bezeichnungen diejenigen der Bezeichnungen zu ermitteln, welche einem der Suchmuster und/oder Suchbegriffe und/oder der Synonyme der ergänzten Abrufvorgabe entsprechen. In anderen Worten können automatisiert zu der benutzerdefinierten Abrufvorgabe, welche auf der Benutzereingabe basiert, zusätzliche Vorgaben ermittelt werden, welche die Benutzereingabe sinnvoll ergänzen. So ist es denkbar, dass ein Benutzer bei der Suche eine alternative Bezeichnung verwendet, welche so nicht in der Benutzeroberfläche angezeigt wird. Durch die Ergänzung mit weiteren, semantisch gleichen oder ähnlichen Begriffen, kann die Suche deutlich vereinfacht werden. Dabei ist es denkbar, dass das Ergänzen auf Grundlage einer Begriffsdatenbank erfolgt. Hierzu kann die Begriffsdatenbank bspw. anhand der Benutzereingabe abgefragt werden, um die entsprechenden Synonyme zur Benutzereingabe auszugeben. Dabei können die Synonyme und/oder ähnliche Suchmuster und/oder ähnliche Suchbegriffe von der Begriffsdatenbank umfasst sein. Auch ist es optional vorgesehen, dass die Begriffsdatenbank automatisch auf Grundlage von Benutzersucheingaben bei einer vorangegangenen Bedienung der Textilmaschine ergänzt wird. Auf diese Weise kann die Begriffsdatenbank selbstlernend sein.

Vorteilhaft ist es zudem, wenn die Abruffunktion auf Basis eines Algorithmus des maschinellen Lernens bereitgestellt wird. Ein solcher Algorithmus kann bspw. zuvor dafür trainiert worden sein, auf Basis von bestimmten Benutzereingaben bestimmte Bezeichnungen zu ermitteln. Hierzu kann bspw. ein künstliches neuronales Netz mit Trainingsdaten trainiert werden, wobei die Trainingsdaten Annotationsdaten mit einem gewünschten Ergebnis umfassen. Als neuronales Netz kommt bspw. ein CNN (Convolutional Neural Network) in Frage. Die Annotationsdaten können bspw. manuell für verschiedene, beispielhafte Benutzereingaben der Trainingsdaten vorgegeben werden.

Ebenfalls Gegenstand der Erfindung ist ein System, aufweisend eine Vorrichtung zur Datenverarbeitung, die Mittel zur Ausführung des erfindungsgemäßen Verfahrens umfasst, wenigstens eine Textilmaschine, welche mit der Vorrichtung in Datenverbindung steht, um durch die Benutzeroberfläche bedient zu werden, und eine Anzeigevorrichtung zur Ausgabe der Benutzeroberfläche. Damit bringt das erfindungsgemäße System die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnung Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

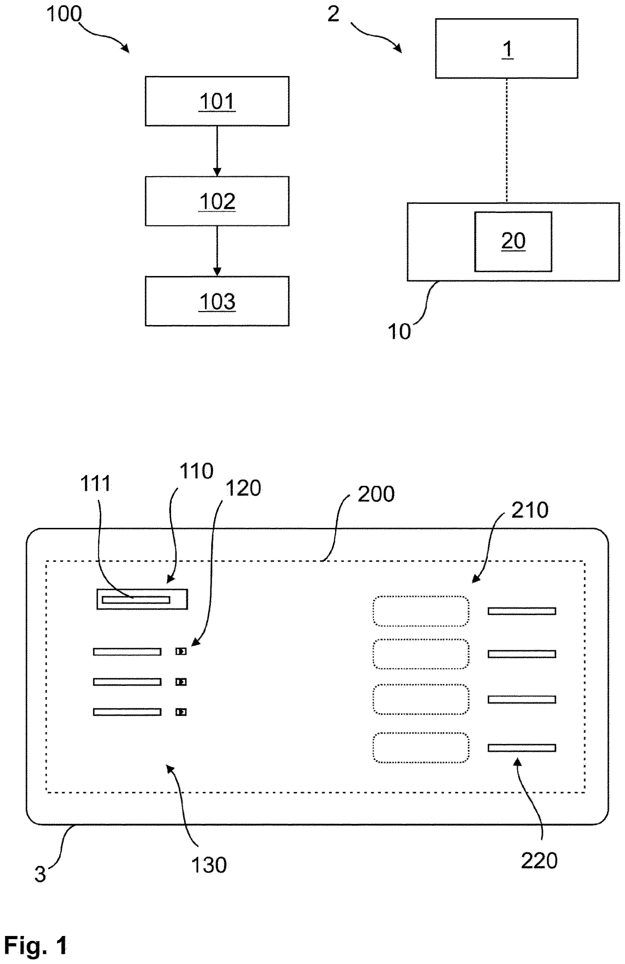

Fig. 1 veranschaulicht dabei beispielhaft ein Verfahren 100 zur Überwachung und/oder Bedienung einer Textilmaschine 1. Gemäß einem ersten Verfahrensschritt 101 kann ein Bereitstellen einer Abruffunktion 110 für wenigstens eine Benutzeroberfläche 200 erfolgen. Die wenigstens eine Benutzeroberfläche 200 kann dabei mehrere, insbesondere grafische, Schnittstellenelemente 210 umfassen, welche zur Ausgabe von Maschinenparametern und/oder zur Eingabe von Einstellungen durch einen Benutzer aufgerufen werden können. Auf diese Weise ist es durch die Schnittstellenelemente 210 möglich, die Textilmaschine 1 zu überwachen und/oder zu bedienen. Um die Bedienung und Überwachung zu vereinfachen, kann jedem der Schnittstellenelemente 210 eine Bezeichnung 220 zugeordnet sein. Die Bezeichnung 220 beschreibt bspw. die Funktion eines Schnittstellenelements 210, z. B. durch eine Angabe eines Maschinenparameters oder einer Einstellung, welche(r) durch das Schnittstellenelement 210 aus- oder eingegeben wird. Hierzu kann die Bezeichnung 220 zusammen mit den Schnittstellenelementen 210 über die Benutzeroberfläche 200 grafisch für den Benutzer dargestellt werden. Dennoch kann es bei einer Vielzahl verschiedener Schnittstellenelemente 210 auf ggf. unterschiedlichen Seiten der Benutzeroberfläche 200 schwierig für den Benutzer sein, schnell zu dem gewünschten Schnittstellenelement 210 zu gelangen. Daher kann die Abruffunktion 110 ein Abrufen und insbesondere Suchen der Bezeichnungen 220 auf Basis einer Abrufvorgabe 111 ermöglichen, um diejenigen der Bezeichnungen 220 zu ermitteln, welche der Abrufvorgabe 111 entsprechen. Die Abrufvorgabe 111 kann dabei benutzerdefiniert sein, also durch den Benutzer aktiv eingegeben werden, um nach einer bestimmten Bezeichnung 220 zu suchen.

Gemäß einem zweiten Verfahrensschritt 102 kann eine Ausgabe 130 der ermittelten Bezeichnungen 220 über die wenigstens eine Benutzeroberfläche 200 zur Auswahl durch den Benutzer initiiert werden. Gemäß einem dritten Verfahrensschritt 103 kann eine Navigationsfunktion 120 für die wenigstens eine Benutzeroberfläche 200 bereitgestellt werden, wobei durch die Navigationsfunktion 120 das Schnittstellenelement 210 aufgerufen wird, dem die durch den Benutzer ausgewählte ermittelte Bezeichnung 220 zugeordnet ist.

Die Abruffunktion 110 kann eine Suchfunktion 110 umfassen, um in den Bezeichnungen 220 diejenigen der Bezeichnungen 220 zu ermitteln, welche der Abrufvorgabe 111 in der Form einer Suchvorgabe 111 entsprechen. Die Suchvorgabe 111 kann ein Suchmuster sein, also bestimmten Zeichenmuster vorgeben, welche in den Bezeichnungen 220 vorkommen müssen. Ebenfalls kann die Suchvorgabe 111 einen Suchbegriff definieren, nach welchen in den Bezeichnungen 220 gesucht wird. Eine weitere Möglichkeit ist die Angabe einer Ähnlichkeitsvorgabe durch die Suchvorgabe 111 zur unscharfen Suche nach einem Suchbegriff. Hierbei können geringe Abweichungen wie Rechtschreibfehler toleriert werden und dennoch zu einer Entsprechung einer Bezeichnung 220 mit der Suchvorgabe 111 führen. Möglich ist es ebenfalls, dass nach einem oder mehreren Anfangsbuchstaben einer zu suchenden Bezeichnung 220 gesucht wird. Ebenfalls kann durch die Suchvorgabe 111 der Umfang definiert werden, in welchem das Suchmuster, der Suchbegriff oder dergleichen in der Bezeichnung 220 vorkommen muss. Bspw. kann vordefiniert sein, dass der vollständige Suchbegriff oder auch nur ein Teil davon in der Bezeichnung 220 vorhanden sein muss, damit die Bezeichnung 220 ermittelt und anschließend für den Benutzer ausgegeben wird.

Um die Navigation durch die Benutzeroberfläche 200 weiter zu vereinfachen, kann eine Häufigkeit ermittelt werden, mit welcher die Schnittstellenelemente 210, denen die ermittelten Bezeichnungen 220 zugeordnet sind, bislang aufgerufen wurden. Die Häufigkeit kann für verschiedene Zwecke genutzt werden. So ist es möglich, dass diejenigen Bezeichnungen 220 höher priorisiert werden, deren Schnittstellenelemente 210 am häufigsten aufgerufen wurden. Dies kann durch ein Ermitteln einer Reihenfolge für die Ausgabe 130 der ermittelten Bezeichnungen 220 erfolgen, um die Ausgabe 130 der ermittelten Bezeichnungen 220 abhängig von der ermittelten Häufigkeit sortiert zu initiieren. Wenn diejenige der ermittelten Bezeichnungen 220 an erster Stelle ausgegeben wird, deren Schnittstellenelement 210 bei einer vorangegangenen Bedienung der Textilmaschine 1 am häufigsten aufgerufen wurde, kann dies zu einem komfortableren und schnelleren Zugriff für den Benutzer führen. Um während der Bedienung der Textilmaschine 1 die Häufigkeit zu ermitteln, kann ein Protokollieren der Anzahl der Aufrufe der Schnittstellenelemente 210 während der Bedienung erfolgen. Hierzu kann z. B. jedem der Schnittstellenelemente 210 ein Zähler zugeordnet werden, welcher bei jedem Aufruf inkrementiert wird.

Ebenfalls ist es möglich, dass eine Auswahlfunktion für die Auswahl durch den Benutzer bereitgestellt wird, um wenigstens oder genau eine der ermittelten Bezeichnungen 220 auszuwählen. Die Auswahl kann z. B. durch eine Auswahlaktion wie ein Berühren der Bezeichnungen 220 auf einem Touchscreen erfolgen. Ebenfalls ist es möglich, dass eine Ausgabe einer Auswahl- und/oder Navigationsschaltfläche 120 für die jeweilige ermittelte Bezeichnung 220 durchgeführt wird. Diese Schaltfläche kann jeweils eine der Bezeichnungen 220 selbst aufweisen oder einer der Bezeichnungen 220 zugeordnet sein. Durch die Auswahlaktion kann die Auswahl- und/oder Navigationsschaltfläche 120 durch den Benutzer aktiviert werden, um dann über einen Verweis zu einem der Schnittstellenelemente 210 das entsprechende Schnittstellenelement 210 aufzurufen.

Wenn das Schnittstellenelement 210, dem die durch den Benutzer ausgewählte ermittelte Bezeichnung 220 zugeordnet ist, aufgerufen wird, kann eine Darstellung des Schnittstellenelements 210 auf der Benutzeroberfläche 200 erfolgen und die entsprechende Ausgabe von Maschinenparametern initiiert und/oder Eingabe durch den Benutzer ausgewertet werden. Ebenfalls kann der Aufruf bewirken, dass aktuelle Einstell- und/oder Messwerte der Textilmaschine 1 ermittelt und ausgegeben werden. Hierzu kann bspw. eine Abfrage von Sensoren der Textilmaschine 1 vorgesehen sein, welche wiederholt und/oder getriggert durch den Aufruf ausgelesen werden. Zum Ermitteln der aktuellen Einstell- und/oder Messwerte können zu diesem Zwecke Daten von der Textilmaschine 1 empfangen und einem der Schnittstellenelemente 210 zugeordnet werden. Die ermittelten Daten können als Ist-Werte aufgefasst werden, wohingegen die Eingaben des Benutzers als Soll-Werte zur Einstellung von Maschinenparametern vorgesehen sein können.

Eine weitere Ausbildung der Abruffunktion 110 ist die einer Suchfunktion 110, welche bei den Maschinenparametern und vorzugsweise in den Einstell- und/oder Messwerten diejenigen ermittelt, welche der Abrufvorgabe 111 in der Form einer Suchvorgabe 111 entsprechen. Somit kann nicht (nur) in den Bezeichnungen 220 gesucht werden, sondern auch in den Einstell- und/oder Messwerten der Schnittstellenelemente 210 selbst. Damit ist der Benutzer in der Lage, nach bestimmten Einstellungen oder Werten zu suchen.

Um die Abrufvorgabe 111 durch den Benutzer zu definieren, kann der Benutzer zu einer Benutzersucheingabe aufgefordert werden. Diese Eingabe kann ebenfalls über die Benutzeroberfläche möglich sein, bspw. durch eine Eingabe mittels einer Tastatur und/oder eines Touchscreens und/oder einer Spracheingabe und/oder einer Geste und/oder dergleichen. Da dem Benutzer ggf. nicht bekannt ist, wie eine bestimmte Bezeichnung 220 lautet, kann die Abrufvorgabe 111 ggf. auch automatisch um Synonyme und/oder ähnliche Suchmuster und/oder ähnliche Suchbegriffe ergänzt werden. Diese können dann bei der Suche ebenfalls berücksichtigt werden. Dieses Ergänzen kann auf Grundlage einer Begriffsdatenbank erfolgen, welche die Synonyme und/oder ähnliche Suchmuster und/oder ähnliche Suchbegriffe umfasst. Die Abruffunktion 110 kann eine alphanumerische Eingabe durch den Benutzer erwarten.

Ebenfalls ist es denkbar, dass die Abruffunktion 110 auf Basis eines Algorithmus des maschinellen Lernens bereitgestellt wird. Die Abruffunktion 110 kann in anderen Worten einen Suchalgorithmus aufweisen, welcher auf Maschinenlernen basiert. Hierzu können zunächst Trainingsdaten bereitgestellt werden, die Suchanfragen und zugehörige relevante Suchergebnisse, also die Annotationsdaten, enthalten. Anschließend kann mittels der Trainingsdaten ein Klassifikator durch ein Maschinenlernverfahren trainiert werden. Als Maschinenlernverfahren kommen bspw. Entscheidungsbäume, Random Forests, Support-Vector-Maschinen (SVM) oder Neuronale Netze in Frage. Insbesondere bei der Verwendung eines neuronalen Netzes als Maschinenlernverfahren kann eine Backpropagation zum Einsatz kommen, bei welcher die Trainingsdaten als Eingabe in das Netz eingespeist werden und die Ausgabe des Netzes mit den tatsächlichen relevanten Suchergebnissen verglichen wird. Anschließend kann der Fehler berechnet und die Gewichte des Netzes mithilfe von Backpropagation angepasst werden, um den Fehler zu minimieren. Dieser Prozess kann iterativ durchgeführt werden, bis das Netz eine hohe Vorhersagegenauigkeit erreicht hat. Ein Beispiel für ein neuronales Netz, das für die Vorhersage der Relevanz von Suchergebnissen trainiert werden kann, ist ein Feed Forward-Netzwerk mit mehreren Schichten von Neuronen. Die Eingabe des Netzes können bspw. Merkmale der Suchanfrage sein, wie z. B. Schlüsselwörter, Suchhistorie des Benutzers oder Zeitpunkt der Suche. Die Ausgabe des Netzwerks kann eine Wahrscheinlichkeitsverteilung über die Relevanz von Suchergebnissen sein, welche bspw. aus den verfügbaren Bezeichnungen 220 entnommen werden. Das Netz kann dabei aus mehreren Schichten von Neuronen bestehen, die jeweils eine nichtlineare Aktivierungsfunktion wie die Sigmoid-Funktion oder die ReLU-Funktion auf die gewichtete Summe der Eingabe anwenden. Die Ausgabe des Netzes kann dann durch eine Softmax-Funktion normalisiert werden, um eine Wahrscheinlichkeitsverteilung zu erzeugen.

In Fig. 1 ist ebenfalls ein beispielhaftes System 2 mit einer Vorrichtung 10 zur Datenverarbeitung dargestellt, welches Mittel zur Ausführung des Verfahrens 100 nach Ausführungsbeispielen der Erfindung umfasst. Darüber hinaus kann das System 2 wenigstens eine Textilmaschine 1 umfassen, welche mit der Vorrichtung 10 in Datenverbindung steht, um durch die Benutzeroberfläche 200 bedient zu werden. Außerdem kann eine Anzeigevorrichtung 3, wie ein Touchscreen, zur Ausgabe der Benutzeroberfläche 200 vorgesehen sein. Darüber hinaus kann ein Computerprogramm 20 gemäß Ausführungsbeispielen der Erfindung Teil der Vorrichtung 10 sein.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Textilmaschine
- 2: System
- 3: Anzeigevorrichtung

- 10: Vorrichtung, Computer

- 20: Computerprogramm

- 100: Verfahren
- 101: erster Verfahrensschritt
- 102: zweiter Verfahrensschritt
- 103: dritter Verfahrensschritt
- 110: Abruffunktion
- 111: Abrufvorgabe

- 120: Navigationsfunktion, Navigationsschaltfläche
- 130: Ausgabe

- 200: Benutzeroberfläche
- 210: Schnittstellenelemente

- 220: Bezeichnung

## Patentansprüche

1. Verfahren (100) zur Überwachung und/oder Bedienung einer Textilmaschine (1), umfassend die nachfolgenden Schritte:
- Bereitstellen (101) einer Abruffunktion (110) für wenigstens eine Benutzeroberfläche (200), wobei die wenigstens eine Benutzeroberfläche (200) mehrere Schnittstellenelemente (210) umfasst, welche zur Ausgabe von Maschinenparametern und/oder Einstellungen der Textilmaschine (1) und/oder zur Eingabe durch einen Benutzer aufgerufen werden, um dadurch die Textilmaschine (1) zu überwachen und/oder zu bedienen, wobei jedem der Schnittstellenelemente (210) eine Bezeichnung (220) zugeordnet ist, wobei durch die Abruffunktion (110) ein Abrufen, insbesondere Suchen, der Bezeichnungen (220) auf Basis einer Abrufvorgabe (111) vorgesehen ist, um diejenigen der Bezeichnungen (220) zu ermitteln, welche der Abrufvorgabe (111) entsprechen, wobei die Abrufvorgabe (111) durch den Benutzer definiert ist,
- Initiieren (102) einer Ausgabe (130) der ermittelten Bezeichnungen (220) über die wenigstens eine Benutzeroberfläche (200) zur Auswahl durch den Benutzer,
- Bereitstellen (103) einer Navigationsfunktion (120) für die wenigstens eine Benutzeroberfläche (200), wobei durch die Navigationsfunktion (120) das Schnittstellenelement (210) aufgerufen wird, dem die durch den Benutzer ausgewählte ermittelte Bezeichnung (220) zugeordnet ist.

2. Verfahren (100) nach Anspruch 1,
**dadurch gekennzeichnet,**
**dass** die Abruffunktion (110) eine Suchfunktion (110) umfasst, um die Bezeichnungen (220) darauf zu überprüfen, ob diese der Abrufvorgabe (111) in der Form einer Suchvorgabe (111) entsprechen, wobei die Suchvorgabe (111) vorzugsweise ein Suchmuster und/oder einen Suchbegriff und/oder eine Ähnlichkeitsvorgabe zur unscharfen Suche nach einem Suchbegriff und/oder einen oder mehrere Anfangsbuchstaben einer zu suchenden Bezeichnung (220) umfasst, wobei bevorzugt die Suchvorgabe (111) definiert, dass und/oder in welchem Umfang das Suchmuster und/oder der Suchbegriff und/oder die Ähnlichkeitsvorgabe und/oder die Anfangsbuchstaben in einer Bezeichnung (220) vorkommen, damit die Suchvorgabe (111) dieser Bezeichnung (220) entspricht.

3. Verfahren (100) nach einem der vorhergehenden Ansprüche,
**dadurch gekennzeichnet,**
**dass** durch die Abruffunktion (110) eine Mehrzahl derjenigen der Bezeichnungen (220) ermittelt wird, welche der Abrufvorgabe (111) entsprechen, wobei das Initiieren (102) der Ausgabe (130) die nachfolgenden Schritte umfasst:
- Ermitteln einer Häufigkeit, mit welcher die Schnittstellenelemente (210), denen die ermittelten Bezeichnungen (220) zugeordnet sind, aufgerufen wurden,
- Ermitteln einer Reihenfolge für die Ausgabe (130) der ermittelten Bezeichnungen (220), um die Ausgabe (130) der ermittelten Bezeichnungen (220) abhängig von der ermittelten Häufigkeit sortiert zu initiieren, vorzugsweise derart, dass diejenige der ermittelten Bezeichnungen (220) an erster Stelle ausgegeben wird, deren Schnittstellenelement (210) bei einer vorangegangenen Bedienung der Textilmaschine (1) am häufigsten aufgerufen wurde.

4. Verfahren (100) nach Anspruch 3,
**dadurch gekennzeichnet,**
**dass** wenigstens einer der nachfolgenden Schritte vorgesehen ist:
- Protokollieren der Anzahl der Aufrufe der Schnittstellenelemente (210) während der Bedienung der Textilmaschine (1), um die Häufigkeit auf Basis der protokollierten Anzahl zu ermitteln,
- Bereitstellen einer Auswahlfunktion für die Auswahl durch den Benutzer, um wenigstens oder genau eine der ermittelten Bezeichnungen (220) auszuwählen, vorzugsweise durch eine Initiierung einer Ausgabe einer Auswahl- und/oder Navigationsschaltfläche (120) für die jeweilige ermittelte Bezeichnung (220), wobei bevorzugt eine Auswahlaktion durch den Benutzer vorgesehen ist, bei welcher die Auswahl- und/oder Navigationsschaltfläche (120) durch den Benutzer aktiviert wird, wobei besonders bevorzugt der Auswahl- und/oder Navigationsschaltfläche (120) ein Verweis zu einem der Schnittstellenelemente (210) zugewiesen wird,
- Bereitstellen der Auswahlfunktion, wobei für die ermittelten Bezeichnungen (220) bei mehrfachem Vorkommen einer gleichlautenden Bezeichnung (220) eine Ausgabe einer Angabe über eine Verortung derer Schnittstellenelemente (210) in der Benutzeroberfläche (200), vorzugsweise in einem Menübaum, initiiert wird, um die Schnittstellenelemente (210) auf Basis der Verortung auszuwählen.

5. Verfahren (100) nach einem der vorhergehenden Ansprüche,
**dadurch gekennzeichnet,**
**dass** das Bereitstellen (103) der Navigationsfunktion (120) den nachfolgenden Schritt umfasst:
- Initiieren einer Ausgabe einer Auswahl- und/oder Navigationsschaltfläche (120) für die jeweilige ermittelte Bezeichnung (220), um bei einer Aktivierung der Auswahl- und/oder Navigationsschaltfläche (120) durch den Benutzer die Bezeichnung (220) auszuwählen und/oder das Schnittstellenelement (210), dem die durch den Benutzer ausgewählte ermittelte Bezeichnung (220) zugeordnet ist, dadurch aufzurufen, dass eine Darstellung des Schnittstellenelements (210) auf der Benutzeroberfläche (200) initiiert wird und die entsprechende Ausgabe wenigstens eines Maschinenparameters und/oder wenigstens einer Einstellung initiiert und/oder eine Eingabe durch den Benutzer ausgewertet wird, um auf Basis der Eingabe die Textilmaschine (1) anzusteuern, wobei bevorzugt initiiert durch die Aktivierung aktuelle Einstell- und/oder Messwerte der Textilmaschine (1) ermittelt und ausgegeben werden, wobei besonders bevorzugt zur Darstellung des Schnittstellenelements (210) ein Wechsel einer Seite der Benutzeroberfläche (200) initiiert wird.

6. Verfahren (100) nach einem der vorhergehenden Ansprüche,
**dadurch gekennzeichnet,**
**dass** die Schnittstellenelemente (210) wenigstens eines der folgenden Elemente umfassen: ein Eingabeelement zur Eingabe von Einstell- und/oder Datenwerten für die Textilmaschine (1), ein Ausgabeelement zur Ausgabe von Einstell- und/oder Messwerten der Textilmaschine (1), ein Aktionselement zur Steuerung der Textilmaschine (1), eine Menübezeichnung für Menüs der wenigstens einen Benutzeroberfläche (200).

7. Verfahren (100) nach einem der vorhergehenden Ansprüche,
**dadurch gekennzeichnet,**
**dass** die nachfolgenden Schritte vorgesehen sind:
- Empfangen von Daten von der Textilmaschine (1), wobei die Daten wenigstens einen Einstell- und/oder Messwert der Textilmaschine (1) angeben und vorzugsweise aus einer Messung wenigstens eines Maschinenparameters der Textilmaschine (1) resultieren,
- Zuordnen des wenigstens einen Einstell- und/oder Messwertes zu einem der Schnittstellenelemente (210),
- Initiieren einer Ausgabe des wenigstens einen Einstell- und/oder Messwertes, wenn das zugeordnete Schnittstellenelement (210) aufgerufen wird, wobei bevorzugt das jeweilige Schnittstellenelement (210) den wenigstens einen Einstell- und/oder Messwert in der Form eines Soll- und/oder Ist-Wertes des Maschinenparameters anzeigt,
- Initiieren einer Ausgabe derjenigen der Bezeichnungen (220), welche dem aufgerufenen Schnittstellenelement (210) zugeordnet sind.

8. Verfahren (100) nach einem der vorhergehenden Ansprüche,
**dadurch gekennzeichnet,**
**dass** die Abruffunktion (110) eine Suchfunktion (110) umfasst, um bei den Maschinenparametern, vorzugsweise in den Einstell- und/oder Messwerten, diejenigen zu ermitteln, welche der Abrufvorgabe (111) in der Form einer Suchvorgabe (111) entsprechen.

9. Verfahren (100) nach einem der vorhergehenden Ansprüche,
**dadurch gekennzeichnet,**
**dass** wenigstens einer der nachfolgenden Schritte vorgesehen ist:
- Auswerten einer Benutzersucheingabe, um die Abrufvorgabe (111) zu definieren,
- Auffordern des Benutzers zur Eingabe der Benutzersucheingabe,
wobei die Benutzersucheingabe aus einer Tastatureingabe und/oder Touchscreen Eingabe und/oder einer Spracheingabe und/oder einer Gestenerkennung und/oder einer Chatbot-Interaktion resultiert, und/oder
**dass** die Abrufvorgabe (111) eine Bedingung für die Schnittstellenelemente (210) definiert, wobei die Abruffunktion (110) die Bezeichnungen (220) darauf überprüft, dass deren Schnittstellenelemente (210) die Bedingung erfüllen, wobei vorzugsweise die Bedingung eine Verfügbarkeit einer Funktion des Schnittstellenelementes (210) bei der Textilmaschine (1) umfasst.

10. Verfahren (100) nach einem der vorhergehenden Ansprüche,
**dadurch gekennzeichnet,**
**dass** die Abrufvorgabe (111) ein Suchmuster und/oder einen Suchbegriff umfasst, wobei der nachfolgende Schritt vorgesehen ist:
- Automatisches Ergänzen der Abrufvorgabe (111), vorzugsweise der Benutzersucheingabe, um Synonyme und/oder ähnliche Suchmuster und/oder ähnliche Suchbegriffe, um in den Bezeichnungen (220) diejenigen der Bezeichnungen (220) zu ermitteln, welche einem der Suchmuster und/oder Suchbegriffe und/oder der Synonyme der ergänzten Abrufvorgabe (111) entsprechen,
wobei vorzugsweise das Ergänzen auf Grundlage einer Begriffsdatenbank erfolgt, welche die Synonyme und/oder ähnliche Suchmuster und/oder ähnliche Suchbegriffe umfasst, wobei die Begriffsdatenbank vorzugsweise automatisch auf Grundlage von Benutzersucheingaben bei einer vorangegangenen Bedienung der Textilmaschine (1) ergänzt wird.

11. Verfahren (100) nach einem der vorhergehenden Ansprüche,
**dadurch gekennzeichnet,**
**dass** die Ausgabe (130) der ermittelten Bezeichnungen (220), insbesondere in der Form einer Auflistung, auf einer anderen Seite der Benutzeroberfläche (200) initiiert wird als den Seiten, auf denen deren Schnittstellenelemente (210) bei dem Aufruf dargestellt werden.

12. Verfahren (100) nach einem der vorhergehenden Ansprüche,
**dadurch gekennzeichnet,**
**dass** die Abruffunktion (110) auf Basis eines Algorithmus des maschinellen Lernens bereitgestellt wird.

13. System (2), aufweisend:
- eine Vorrichtung (10) zur Datenverarbeitung, umfassend Mittel zur Ausführung des Verfahrens (100) nach einem der vorhergehenden Ansprüche,
- wenigstens eine Textilmaschine (1), welche mit der Vorrichtung (10) in Datenverbindung steht, um durch die Benutzeroberfläche (200) bedient zu werden,
- eine Anzeigevorrichtung (3) zur Ausgabe der Benutzeroberfläche (200).

14. Computerprogramm (20), umfassend Befehle, die bei der Ausführung des Computerprogramms (20) durch einen Computer (10) diesen veranlassen, das Verfahren (100) nach einem der Ansprüche 1 bis 12 auszuführen.

15. Vorrichtung (10) zur Datenverarbeitung, umfassend Mittel zur Ausführung des Verfahrens (100) nach einem der Ansprüche 1 bis 12.
